# EUROPEAN PATENT SPECIFICATION

(11) **EP 2 294 923 B1**
(45) Date of publication and mention of the grant of the patent: **14.11.2012**
(21) Application number: 09170019.5
(22) Date of filing: 11.09.2009
(51) Int. Cl.: A23B 4/16, A23B 7/148, B65D 81/26

(54) **Packaged chicory product**
Verpacktes Chicoreeprodukt
Produit à base d'endive emballé

(43) Date of publication of application: 16.03.2011
(73) Proprietor: Partners in Fresh B.V., 1606 ML Venhuizen (NL)
(72) Inventor: Visser, Divera Maria Anna, 1606 ML Venhuizen (NL)
(74) Representative: Hesselink, Dinah Elisabeth

(56) References cited:
- WO-A1-2009/003675
- Anonymous: "2 Endives au Jambon" Jacques Maës, Notre Gamme, [Online] 23 April 2008 (2008-04-23), XP002560105 Retrieved from the Internet: URL:http://www.jacquesmaes.com/> [retrieved on 2009-12-11]
- Anonymous: "Specifications techniques du produit : Endives à la crème et dés de jambon." Les Délices de La Fontmiau, Fiche Technique, [Online] 21 April 2009 (2009-04-21), XP002560106 SARL DELISSE Retrieved from the Internet: URL:http://www.lafontmiau.com/fiches/99.pd f> [retrieved on 2009-12-11]

## Description

The present invention pertains to a packaged chicory product, and to a method for packaging chicory.

Convenience foods are making up an increasing segment of the food market, including the vegetable market. There is a continuous need for new products which the consumer can prepare by the simple act of heating them in the package in which they are obtained from the store. The package should be suitable for heating in conventional heating equipment such as ovens, microwave ovens, steamers, grills, etc. These products are sometimes indicated as ready-to-cook meals or ready-to-heat meals. Packaged food products also find increasing use by professional users, such as the kitchens in hospitals, schools, restaurants, and other institutions where meals for large numbers of consumers are prepared.

Upon preparation, the packaged food products should have good taste, appearance, and aroma. They should be easy to prepare in conventional heating equipment. Further, packaged food products should have an attractive appearance also in the unprepared state. Further, they should have an appropriate refrigerator lifetime, e.g., of at least 3 days.

One of the vegetables where problems have been experienced in the provision of a packaged food product meeting the above requirements is chicory. Cooked chicory has a relatively unattractive appearance, and generates a substantial amount of free water. Further, in many recipes chicory is prepared in combination with a protein-containing product like ham or cheese, and a suitable chicory-containing convenience food product should therefore preferably also contain a protein-containing product.

Accordingly, there is need for a packaged chicory product wherein chicory is combined with a protein-containing product, wherein on the one hand the packaged product has a refrigerator storage life of at least 3 days, and wherein the product can be prepared in conventional heating equipment without having to be removed from the package.

The present invention provides such a product.

The invention therefore pertains to a packaged chicory product comprising a container comprising fresh chicory and a protein-containing product selected from the group of cheese, meat products, and combinations thereof, wherein the container is closed with a foil, wherein the closed package has an oxygen influx of 0.05 to 3.2 ml/kg.hour and a carbon dioxide outflux of 0.3-1.5 ml/kg.hour, both determined at a temperature of 4-7°C.

One of the problems which had to be solved by the present invention was the difference in packaging requirements between the chicory on the one hand and the protein-containing product on the other hand. After extensive research, it was discovered that in a package which meets the above requirements the chicory will retain its freshness and good taste, without for example turning sour, while at the same time the cheese and meat products will also retain good properties. In particular, the meat will retain its color and freshness, and the cheese, for example grated cheese, will also not deteriorate visibly. Without wishing to be bound by theory, it is believed that the problems occurring in the packaging of fresh chicory in combination with a protein-containing product selected from cheese, meat products, and combinations thereof are caused by the combination of the different holding requirements for the chicory on the one hand and the protein-containing product on the other hand, and are further complicated by the fact that fresh chicory shows respiratory behaviour.

More in particular, to prevent souring of the chicory, a certain percentage of oxygen is required. However, the presence of too much oxygen will detrimentally effect the properties of the protein-containing product. As regards carbon dioxide, the chicory places an upper limit on the amount of carbon dioxide present to prevent souring of the chicory. On the other hand, the protein-containing product generally benefits from the presence of large amounts of carbon dioxide. The respiratory behaviour of the chicory, that is, that it converts oxygen into carbon dioxide, further complicates matters. This is the reason that packaging the combination of fresh chicory with a protein-containing product was so very difficult.

The present invention provides a packaged chicory product with a refrigerator lifetime of at least 3 days, in particular at least 4 days. More in particular, the product has a refrigerator lifetime of at least 5 days, at least 6 days, or even at least 7 days. It has been found that a refrigerator lifetime of at least 8 days can be obtained with the present invention. The refrigerator lifetime of a product is defined as the time, calculated from the moment of packaging, after which the product still looks and tastes acceptable when kept under refrigeration conditions. In the present specification, refrigeration are keeping at 4°C in the dark for the first 24 hours after packaging (mimicking warehouse conditions), followed by keeping at 7°C for the remaining days, with each day light being on for 9 hours, and off for the remaining hours.

The package has an oxygen influx of 0.05 to 3.2 ml/kg.hour. Such a low oxygen influx allows the oxygen concentration inside the headspace of the package to approach zero (below the detection limit of 0.01%) and still keep the fresh chicory in a good quality. A lower oxygen influx would result in full fermentation and souring of the chicory. However, if the oxygen influx becomes too high, the oxygen concentration in the package will become measurable (>0.01%) and the meat and/or cheese product will start to discolour and the colour of ham, if present, may turn greyish.

It may be preferred for the package to have an oxygen influx of 0.05 to 2.0 ml/kg.hour.

It is noted that oxygen influx and carbon dioxide outflux are determined by the package as a whole. In flow-pack style packages this required influx will be enabled by the packaging film. In top-seal packages, they are determined by both the container and the top-seal film. As the container is generally relatively impermeable, the top-seal film may enable all or almost all of the oxygen influx and carbon dioxide outflux.

In one embodiment it may be preferred that the package has an initial oxygen content between 0.2 and 15% just after packaging, more in particular between 0.2 and 10%. Values lower than 0.2% are not realistic because it is technically difficult to achieve lower initial oxygen values with conventional packaging machines. In the first hours directly after packaging the fresh chicory will consume all oxygen present and the effective oxygen concentration will reach zero. From that moment on the fresh chicory will depend on oxygen gas influx coming through the package. It is important to keep the time period that the oxygen concentration is not effectively zero as short as possible, since the meat and cheese that can be present are best protected in an anaerobic atmosphere. Therefore, is best to optimise between getting the lowest initial oxygen concentration that is possible with a packaging machine and production line speed. Initial oxygen values in the ranges indicated above will assure that the exposure to oxygen is minimised and still keep a reasonable production line speed.

There is a balance between the oxygen influx of the packaging and the preferred initial oxygen content of the packaging. Where the oxygen influx is relatively low, the initial oxygen concentration may be higher. On the other hand where the oxygen influx is higher, the initial oxygen concentration preferably is lower.

In one embodiment of the present invention, the oxygen influx of the packaging is relatively low, e.g., in the range of 0.05 to 2.0 ml/kg.hour, and the initial oxygen concentration is relatively high, e.g., in the range of 5-15%, more in particular in the range of 5-10%, still more in particular in the range of 5-8%. This is a preferred embodiment of the present invention.

In another embodiment, the oxygen influx of the packaging is relatively high, e.g., in the range of above 2.0 to 3.2 ml/kg.hour, and the initial oxygen concentration is relatively low, e.g., in the range of 0.2-4%, more in particular in the range of 0.2-2%, still more in particular in the range of 0.2-1%.

The package has a carbon dioxide outflux of 0.3-1.5 ml/kg.hour. If the carbon dioxide outflux is too low, carbon dioxide gas will accumulate and the concentration in the package will be too high, which may result in souring of the chicory. On the other hand, if the carbon dioxide outflux is too high, the carbon dioxide concentration in the package does not attain levels which are effective in retarding microbiological growth on the meat and cheese component of the packaged product.

As a preferred range for the carbon dioxide outflux, a range of 0.3-1.0 ml/kg.hour may be mentioned. In one embodiment, the carbon dioxide outflux is in the range of 0.3-0.5 ml/kg.hour.

One preferred embodiment within the present invention is a package having an oxygen influx in the range of 0.05 to 2.0 ml/kg.hour in combination with a carbon dioxide or 0.3-1.0 ml/kg.hour in particular 0.3-0.5 ml/kg.hour. In this embodiment, the initial oxygen concentration preferably is in the range of 5-15%, more in particular in the range of 5-10%, still more in particular in the range of 5-8%. This embodiment may, for example be formatted in the form of a top-seal package.

Another embodiment of the present invention is a package having an oxygen influx in the range of above 2.0 to 3.2 ml/kg.hour in combination with a carbon dioxide outflux of 0.5-2.0/kg.hour in particular 0.8-1.5 ml/kg.hour. In this embodiment, the initial oxygen concentration preferably is relatively low, e.g., in the range of 0.2-4%, more in particular in the range of 0.2-2%, still more in particular in the range of 0.2-1%. This embodiment may, for example be formatted in the form of a flow-pack package.

In one embodiment it may be preferred if the package has a carbon dioxide content between 8 and 20% during at least 24 hours of its life. More in particular, it may be preferred if the package has a carbon dioxide content in this range for a period of at least 36 hours, more in particular at least 48 hours. Still more in particular, the package has a carbon dioxide content between 10 and 17 wt.%, more in particular between 10 and 15 wt.% for at least the stipulated time periods. This will increase the refrigerator life of the package.

In one embodiment of the present invention, the package has a moisture outflux of 0.1-0.6 gram/day. It has been found that regulating the moisture outflux may lead to an improved refrigerator lifetime. More in particular, selecting a moisture outflux in the specified range may help to prevent the retention of an unacceptable amount of water in the package which may affect the visual appearance of the product.

Within the context of the present specification, chicory refers to the vegetable *Cichorium intybus L*., also known as witloof chicory, Belgian or French endive, Brussels loof, witlo(o)f and chicon. Fresh chicory refers to chicory which has not been cooked, baked, steamed, grilled, or subjected to any other food processing operation.

The chicory used in the present invention may be from regular or organic origin. The use of chicory grown on water may be preferred. If the chicory is washed prior to incorporation into the package, care should be taken that it is properly dried, to avoid the presence of too much water in the package. The presence of too much water may lead to opening of the cell structure. This may lead to increased growth of microorganisms. The use of non-washed water-grown chicory may be preferred. It is also preferred if the chicory originates from a agro-alimentary chain which is controlled as regards the application of adequate hygienic standards. From daily practice it is known that chicory that is carefully grown and hygienically processed typically has a total aerobics count that is relatively low, e.g., in the range of 1000 CFU/g or less. Chicory with an aerobics count in this range is preferred for use in the preparation of complex fresh meals, as are those according to the invention.

The chicory is preferably pre-treated by removing the outer leafs and the lowest part of the piece of chicory, the cut wound of the stem. Appropriate methods for pro-treating the chicory will be evident to the skilled person.

In the invention a protein-containing product selected from the group of cheese, meat products, and combinations thereof, is used. The amount of protein-containing product used in the present invention may vary within wide ranges. For example, the amount may vary between 5 and 50wt.%, calculated on the total weight of the chicory and the protein-containing product selected from the group of cheese, meat products, and combinations thereof.

Cheese as used in the present invention may be any kind of cheese whether originating from cow's milk, goat's milk, sheep's milk, any other milk, or even from vegetable origin (cheese analogous products). Particularly suitable for use in the present invention is cheese which has been aged for at least 4 weeks. In general the cheese should be selected with a refrigerator storage life of at least two weeks (determined under conventional refrigeration conditions). Suitable cheese types include Gouda, Beemster, Edam, Parmezan, Emmenthaler. In some embodiments Mozzarella may be used.

The cheese may be used in any form, e.g., in the form of slices, flakes, or grated. Slices may be used, for example, wrapped around the chicory, or draped over the chicory. Grated cheese may be used to sprinkle over the chicory. Combinations of slices with grated cheese are also envisaged.

The meat product used in the present invention is a cooked or cured meat product. Within the context of the present specification the indication meat product may also encompass cooked or cured fish products. The use of non-fish meat products may, however, be preferred. In general a product will be used which has a refrigerator storage life of at least two weeks (determined under conventional refrigeration conditions). Examples of suitable (non-fish) meat products are ham, whether cooked or cured, bacon, cooked chicken, cooked turkey, and sausages like cooked sausage, salami, pepperoni, or chorizo. Examples of suitable fish products are smoked fish products, including smoked salmon and smoked mackerel.

The meat product can be used in any form, e.g., in the form of slices or pieces. In one embodiment, meat in the form of slices is used, which are rolled around the chicory, or draped over the chicory. Meat may also be used in the form of strips or pieces, which may, for example, be sprinkled over the chicory.

The combination of ham and cheese, for example chicory wrapped in ham sprinkled with grated cheese, or chicory wrapped in ham and cheese and sprinkled with grated cheese may be listed as preferred embodiments. Other examples encompass chicory wrapped in cheese with further cheese sprinkled on top. Obviously, the combination of two or more types of cheese and/or two or more types of meat product is also envisaged within the present invention.

The packaged product according to the invention may encompass other components, as long as they do not detrimentally affect the properties of the product. Examples of other components which may be present are herbs, spices, and other taste improvers. Examples of possible additives are salt, pepper, garlic, red pepper or chilly powder, curry powder, chives, and parsley.

In a further embodiment of the present invention the package additionally contains cooked products, for example sauces or mashed potatoes. When cooked product is used, it is necessary that they are cold, i.e. at a temperature below 10°C when they are contacted with the fresh chicory. This can, for example, be effected by first bringing the cooked product into the package, cooling it, and then adding the fresh chicory. It can also be effected by adding the cooked product in cold form to a package already containing the chicory.

The present invention therefore encompasses both a packaged chicory product comprising fresh chicory, a protein-containing product selected from cheese, meat products, and combinations thereof, which does not contain a cooked product as described above and a packaged chicory product comprising fresh chicory, a protein-containing product selected from cheese, meat products, and combinations thereof, in combination with a cooked product as described above.

As will be evident to the skilled person, the product should be packaged under appropriate conditions as regards hygiene, for example under conditions meeting the BRC food packaging standard. In particular, it is advisable to package the product at a low temperature, e.g., in the range of 2-7°C.

In the present invention, the container containing the chicory and the protein-containing product is closed with a foil The manner in which the foil is applied is not critical for the present invention. In one embodiment, the foil is adhered to the edges of the container to provide a so-called top-seal.

In another embodiment, a foil package is created which surrounds the container, in the form of a so-called flow-pack.

Since the film surface for a flow-pack is usually 2.5-3.5 times large than for a top-sealed tray, the permeability values of the film used in a flow-pack need to be adjusted to meet the requirements as to the oxygen-influx, carbon dioxide outflux, and further parameters as specified above.

In commercial practice, this will be effected by selecting relatively less permeable films when a flow-pack is to be used. For example, for a flow-pack a foil, e.g., a polypropylene foil, may be selected with an oxygen transmission rate of 1000-2500 ml/m2.bar.day at 22°C and a carbon dioxide transmission rate of 4000-10000 ml/m2.bar.day. At a temperature of 4-7°C, this may result in an oxygen transmission rate of about 150-600 ml/m2.bar.day. A PET foil may also be used, which may have an oxygen transmission rate at 22°C of 40-200 ml/m2.bar.day and a carbon dioxide transmission rate of 240-1200 ml/m2.bar.day at 22°C. It is also possible to use a foil, e.g., a polylactic acid (PLA) foil which has an oxygen transmission rate at 22°C of 300-800 ml/m2.bar.day and a carbon dioxide transmission rate of 1800-2400 ml/m2.bar.day.

The packaged chicory product according to the invention is suitable for in-package preparation in conventional heating equipment such as microwaves, ovens, streamers, combinations of microwave and grill, or, preferably for all methods.

The container and foil used in the packaged product according to the invention are selected accordingly. It is well within the scope of the skilled person to select containers and foils which are suitable for use in ovens and microwave ovens.

The container used in the present invention may, for example, be a tray made from metal, for example oven-compatible aluminium, microwave-compatible aluminium, tin foil, or microwave and/or oven resistant plastics such as polypropylene, C-PET, and combinations thereof. Examples of combinations include plastic trays, e.g., PP trays, provided with an aluminium framework. Plastic-coated wooded trays, plastic-coated pulp trays, plastic-coated cardboard trays, or stoneware trays may also be used as long as they can resist the conditions which the product encounters in its lifetime. It is within the scope of the packaging technologist to select an appropriate tray.

The foil may be any foil suitable for use in packaging as long as it can provide the required oxygen influx, carbon dioxide outflux, and, where appropriate, moisture outflux. Further, the foil should be sealable, for example in the form of a top-seal or as a flow-pack. The foil preferably is transparent, so that the packaged product is visible from the outside. The foil is preferably provided with an anti-fogging agent.

In one embodiment the foil substantially free from microperforations or laser perforations with a size of 50 microns or larger. In the present context the wording substantially free from perforations means that it is acceptable for a few perforations to be present if they do not detrimentally affect the properties of the product. More in particular, the foil should in this embodiment contain less than 1 perforation per cm², preferably less than 0.5 per cm², still more preferably less than 0.1 per cm².

The foil generally has a thickness between 5 and 150 microns, preferably between 10 and 50 microns, more preferably between 15 and 40 microns.

In general, the foil has an oxygen transmission rate of 100 to 4000 m1/m².24hr.bar (determined at 22°C and 95% relative humidity), more in particular of 300 to 3000 ml/m².24hr.bar.

In general, the foil has a water vapour transmission rate of 0.1-50 gram/m2.24h (determined at 22°C and 100% relative humidity inside and 50% relative humidity outside), preferably more in particular of 1 to 20 ml/m².24hr.bar.

In general, the foil has a carbon dioxide transmission rate of 500 to 20000 ml/m².24hr.bar (determined at 22°C and 95% relative humidity), more in particular of 1000 to 12000 ml/m².24hr.bar, still more in particular 2000 to 8000 ml/m².24hr.bar.

As suitable foils may be mentioned foils comprising polyethylene terephthalate, polyethylene-co-ethylacrylate, nitrocellulose-lacquered cellophane, polyethylene, polypropylene, polylactic acid, etc. Given the above guidelines it is well within the scope of the skilled person to select a suitable foil.

Where the product is to be suitable for preparation in a microwave oven, it may be preferred to provide the package with a steam vent, or with a seal that will rupture in the microwave to form a steam vent.

The present invention also pertains to a method for preparing the packaged chicory products discussed above. The method according to the invention comprises the steps of bringing fresh chicory and a protein-containing product selected from the group of cheese, meat products, and combinations thereof, in a container, and closing the container with a foil, wherein the nature of the foil, the nature of the container, the amount of chicory, and the starting atmosphere of the package are selected such that the package has an oxygen influx of 0.05 to 3.2 ml/kg.hour, and a carbon dioxide outflux of 0.3-1.5 ml/kg.hour.

The oxygen influx, carbon dioxide outflux, and, where appropriate, water outflux of the package are determined by a number of parameters, namely the nature of the foil, the nature of the container, the amount of chicory, and the starting atmosphere of the package. The nature of the foil influences the in- and outflux of oxygen and carbon dioxide, respectively. The higher the oxygen transmission rate, the higher the influx of oxygen will be. The higher the carbon dioxide transmission rate, the higher, the outflux of carbon dioxide will be. The higher the water vapour transmission rate, the higher the water outflux will be. Where the package contains more chicory, the oxygen influx, carbon dioxide outflux, and water outflux will be increased due to the respiratory activity of the chicory. The selection of the atmosphere inside the package, in combination with the above parameters will also influence the in- and outflux of oxygen, carbon dioxide, and water.

In one embodiment of the present invention, fresh chicory, e.g., in an amount of between 100 and 700 grams, more specifically in an amount of 250-600 grams, and a protein-containing product selected from the group of cheese, meat products, and combinations thereof, are brought in a container, the container is provided with an atmosphere comprising 3-10 % of oxygen, in particular 4-8 %, more in particular 5-7 % and the balance an inert gas, for example nitrogen, and the container is closed with a foil which has an oxygen transmission rate of 1500 to 3000 ml/m².24hr.bar, a carbon dioxide transmission rate of 4000 to 12000 ml/m².24hr.bar, and a water vapour transmission rate of 0.1 to 2 gram/m².24h.

In another embodiment of the present invention, fresh chicory, e.g., in an amount of between 100 and 700 grams, more specifically in an amount of 250-600 grams, and a protein-containing product selected from the group of cheese, meat products, and combinations thereof, are brought in a container, the container is provided with an atmosphere comprising air, and the container is closed with a foil which has an oxygen transmission rate of 200 to 1000 ml/m².24hr.bar, a carbon dioxide transmission rate of 1000 to 6000 ml/m².24hr.bar, and a water vapour transmission rate of 1 to 20 gram/m².24h.

In a further embodiment of the present invention, fresh chicory is packaged with a protein-containing product in a flow pack in a container, e.g., a container of aluminium or plastic such as polypropylene or C-PET, or a further container as described above. The use of aluminium may be preferred, because it allows post-treatment in an oven or grill. This may be particularly attractive for professional application, but also for consumer applications. The foil for the flow pack has an oxygen transmission rate of 100 to 1000 ml/m².24hr.bar, a carbon dioxide transmission rate of 500 to 10000 ml/m².24hr.bar, and a water vapour transmission rate of 0.1 to 15 gram/m².24h at 22°C.

The present invention also pertains to a method for preparing a cooked chicory product wherein a packaged chicory product as discussed above is heated for a time sufficient to prepare a cooked product. Heating can be carried out in conventional heating apparatus, for example in an oven, in a microwave oven, in a steamer, or in a combination of equipment, for example in a microwave oven followed by a brief period under a grill or in an oven, after removal of the foil.

In one embodiment, the packaged chicory product is heated in a microwave oven. Preparation time will depend on the weight of the chicory and the power of the microwave oven, and can be determined by the skilled person. For example, a package containing 2 heads of chicory can be cooked by heating it for a period of 4-8 minutes at 500-1000 W.

The present invention will be elucidated by the following examples, without being limited thereto or thereby.

### Examples

The following two packaging examples were tested.

### Packaging Example A

Chicory was wrapped in ham, placed in a transparent polypropylene tray, and sprinkled with grated cheese. The amount of chicory was 300-600 grams, the amount of ham was about 70 grams, the amount of cheese was about 40 grams. The headspace of the packaging was replaced with an atmosphere containing 6% of oxygen and the balance nitrogen. The packaging was sealed with a thin polypropylene top-foil. The foil had a thickness of 18 microns, an OTR (oxygen transmission rate) of 2200 ml/m².24hr.bar (determined at 22°C and 95% relative humidity), a carbon dioxide transmission rate of 7000 ml/m².24hr.bar (determined at 22°C and 95% relative humidity), and a WVTR (water vapour transmission rate) of 1 gram/m².24h (determined at 22°C and 100% relative humidity inside and 50% outside).

The polypropylene tray had a length of 227 mm, a width of 177 mm, and a height of 60 mm.

The closed package has an oxygen influx of 0.18 ml/kg.hour and a carbon dioxide outflux of about 0.5 ml/kg.hour.

### Packaging Example B

Chicory was wrapped in ham, placed in an aluminium tray and sprinkled with grated cheese. The amount of chicory was 290-360 grams, the amount of ham was about 70 grams, the amount of cheese was about 40 grams. The tray was packaged in a flow pack of PLA foil, with air as internal atmosphere. The foil had a thickness of 22 microns, an OTR (oxygen transmission rate) of about 500 ml/m².24hr.bar (determined at 22°C and 95% relative humidity), a carbon dioxide transmission rate of 2500 ml/m².24hr.bar (determined at 22°C and 95% relative humidity), and a WVTR (water vapour transmission rate) of 15 gram/m².24h (determined at 22°C and 100% relative humidity inside and 50% outside).

The tray had a length of 220 mm, a width of 150 mm, and a height of 42 mm. The flow pack was 280 mm long and 210 mm wide.

The closed package has an oxygen influx of 0.13 ml/kg.hour and a carbon dioxide outflux of 3.2 ml/kg.hour.

All packages were kept under refrigeration conditions as specified above.

At each of days 3, 5, 7, and 9, the packages were assessed in quadruplicate as regards oxygen content, carbon dioxide content, moisture loss, general impression, the presence of droplets of water on the foil, the chicory, and the cheese, and the aroma on opening. The chicory was assessed as regards texture, discoloration of the cut surface, discoloration of the tips, and taste. The ham and cheese were assessed as regards color, aroma, taste, texture, and abnormalities. After heating for 5 minutes at 600W (with one puncture being applied in the foil), the meals were assessed as regards appearance, aroma, and taste.

### Results

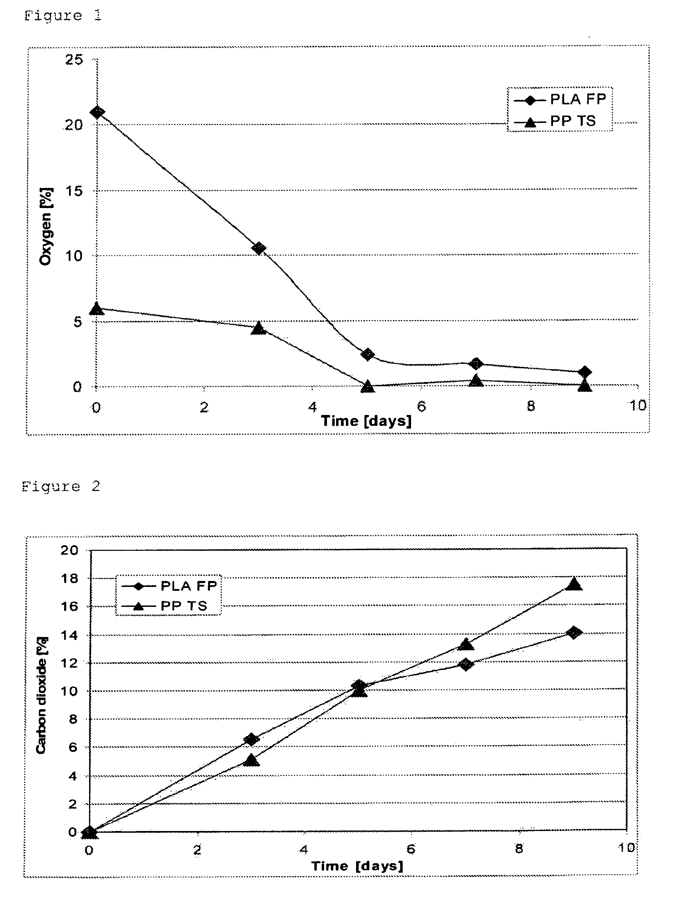

The oxygen content of the packages over time is presented in Figure 1. The carbon dioxide content over time is presented in Figure 2. In all figures, PLA FP refers to the packaged product according to Example B. PP TS refers to the packaged product according to Example A. As can be seen, the oxygen concentration decreases in all packages over time, while the carbon dioxide concentration increases.

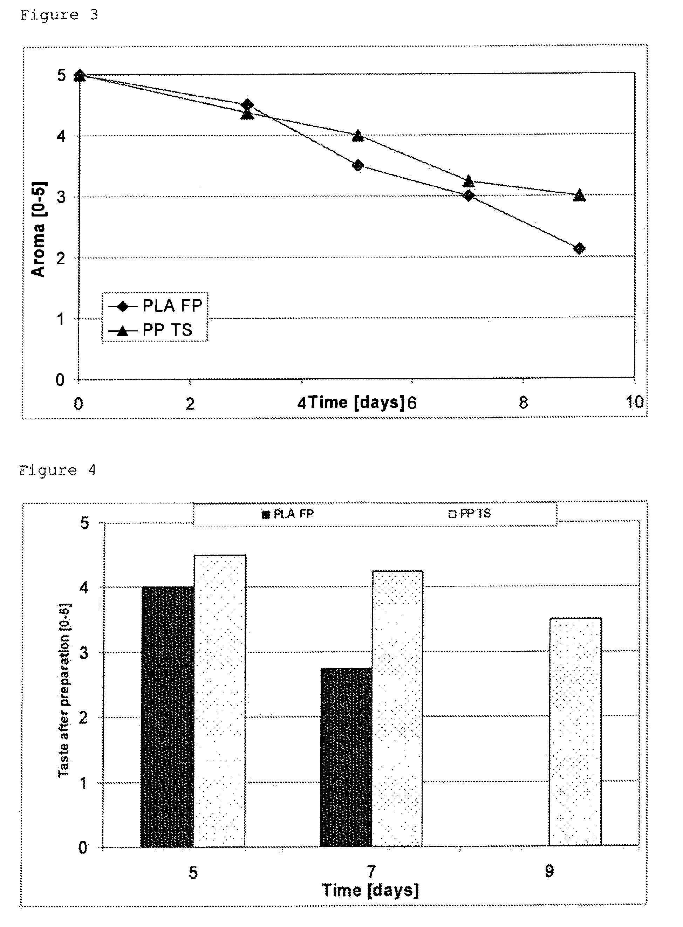

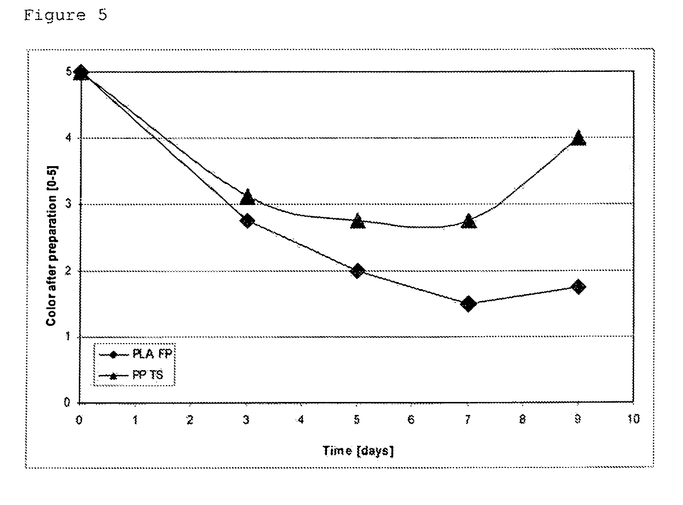

In all packages, relatively little free water was formed in the form of droplets. In all of the packages, discoloration of the tips and the cutting surface was relatively limited. The ham and cheese also continued to be visually attractive. After preparation in a microwave oven, all products has adequate taste and smell. The taste of the product in package A was the best. Figures 3, 4, and 5 show the rating of the aroma, the taste, and the color of the product after preparation on a scale of 0 to 5, where 5 is good and 0 is unacceptable.

## Claims

1. Packaged chicory product comprising a container comprising fresh chicory and a protein-containing product selected from the group of cheese, meat products, and combinations thereof, wherein the container is closed with a foil, wherein the closed package has an oxygen influx of 0.05 to 3.2 ml/kg.hour and a carbon dioxide outflux of 0.3-1.5 ml/kg.hour, both determined at a temperature of 4-7°C,

2. Packaged chicory product according to claim 1, **characterised in that** the closed package has an oxygen influx of 0.05 to 2.0 ml/kg.hour and a carbon dioxide outflux of 0.5-1.0 ml/kg.hour.

3. Packaged chicory product according to claim 1 or 2, **characterised in that** the protein-containing product comprises the combination of ham and cheese.

4. Packaged chicory product according to any one of the preceding claims, **characterised in that** the container and the foil are suitable for use in a microwave, in an oven, in a steamer, in a microwave followed by heating under a grill after removal of the foil, or, preferably, suitable for all of the above.

5. Packaged chicory product according to any one of the preceding claims wherein the foil has a thickness between 5 and 150 microns, preferably between 10 and 50 microns, more preferably between 15 and 40 microns.

6. Packaged chicory product according to any one of the preceding claims wherein the foil has an oxygen transmission rate of 25 to 10000 ml/m².24hr.bar (determined at 22°C and 95% relative humidity), more in particular of 100 to 7000 ml/m².24hr.bar and a carbon dioxide transmission rate of 500 to 20000 ml/m².24hr.bar (determined at 22°C and 95% relative humidity), more in particular of 3000 to 12000 ml/m².24hr.bar.

7. Packaged chicory product according to any one of the preceding claims wherein the package has a moisture outflux of 0.1-0.6 gram/day, and the foil has a water vapour transmission rate of 0.1₋50 gram/m².24h (determined at 22 °C and 100% relative humidity inside and 50% outside), preferably of 1 to 20 ml/m².24hr.bar.

8. Method for preparing packaged chicory product according to claim 1-7 which comprises the steps of bringing fresh chicory and a protein-containing product selected from the group of cheese, meat products, and combinations thereof, in a container, and closing the container with a foil, wherein the nature of the foil, the nature of the container, the amount of chicory, and the starting atmosphere of the package are selected such that the package has an oxygen influx or 0.05 to 3.2 ml/kg.hour, and a carbon dioxide outflux of 0.3-1.5 ml/kg.hour, both determined at a temperature of 4-7°C.

9. Method according to claim 8, wherein the container is provided with an atmosphere comprising 3-10 % of oxygen, in particular 4-8 %, more in particular 5-7 % and the balance an inert gas, for example nitrogen, and the container is closed with a foil which has an oxygen transmission rate of 1500 to 3000 ml/m².24hr.bar (determined at 22°C and 95% relative humidity) and a carbon dioxide transmission rate of 4000 to 12000 ml/m².24hr.bar (determined at 22°C and 95% relative humidity), and a water vapour transmission rate of 0.1 to 2 gram/m².24h.

10. Method according to claim 8, wherein the container is provided with an atmosphere comprising air, and the container is closed with a foil which has an oxygen transmission rate of 200 to 1000 ml/m².24hr.bar and a carbon dioxide transmission rate of 1000 to 6000 ml/m².24h.bar.

11. Method for preparing a cooked chicory product wherein a packaged chicory product according to any one of claims 1-7 is heated for a time sufficient to prepare a cooked product.

## Patentansprüche

1. Verpacktes Chicoréeprodukt, das aufweist: einen Behälter mit frischem Chicorée und einem proteinhaltigen Produkt, das aus der Gruppe aus Käse, Fleischprodukten und deren Kombinationen ausgewählt ist, wobei der Behälter mit einer Folie verschlossen ist, wobei die verschlossene Verpackung einen Sauerstoffzufluss von 0,05 bis 3,2 ml/kg · Stunde und einen Kohlendioxidausfluss von 0,3 bis 1,5 ml/kg · Stunde, beide bei 4 bis 7 °C Temperatur bestimmt, hat.

2. Verpacktes Chicoréeprodukt nach Anspruch 1, **dadurch gekennzeichnet, dass** die verschlossene Verpackung einen Sauerstoffzufluss von 0,05 bis 2,0 ml/kg · Stunde und einen Kohlendioxidausfluss von 0,5 bis 1,0 ml/kg · Stunde hat.

3. Verpacktes Chicoréeprodukt nach Anspruch 1 oder 2, **dadurch gekennzeichnet, dass** das proteinhaltige Produkt die Kombination aus Schinken und Käse aufweist.

4. Verpacktes Chicoréeprodukt nach einem der vorstehenden Ansprüche, **dadurch gekennzeichnet, dass** der Behälter und die Folie zum Gebrauch in einem Mikrowellenherd, in einem Ofen, in einem Dämpfer, in einem Mikrowellenherd gefolgt von Erwärmung unter einem Grill nach Entfernung der Folie geeignet oder vorzugsweise für alle zuvor Erwähnten geeignet sind.

5. Verpacktes Chicoréeprodukt nach einem der vorstehenden Ansprüche, wobei die Folie eine Dicke zwischen 5 und 150 Mikrometern, vorzugsweise zwischen 10 und 50 Mikrometern, stärker bevorzugt zwischen 15 und 40 Mikrometern hat.

6. Verpacktes Chicoréeprodukt nach einem der vorstehenden Ansprüche, wobei die Folie eine Sauerstoff-Durchlässigkeitsrate von 25 bis 10000 ml/m² · 24 h · bar (bestimmt bei 22 °C und 95 % relativer Luftfeuchtigkeit), insbesondere 100 bis 7000 ml/m² · 24 h · bar, und eine Kohlendioxid-Durchlässigkeitsrate von 500 bis 20000 ml/m² · 24 h · bar (bestimmt bei 22 °C und 95 % relativer Luftfeuchtigkeit), insbesondere 3000 bis 12000 ml/m² · 24 h · bar, hat.

7. Verpacktes Chicoréeprodukt nach einem der vorstehenden Ansprüche, wobei die Verpackung einen Feuchtigkeitsausfluss von 0,1 bis 0,6 Gramm/Tag hat und die Folie eine Wasserdampf-Durchlässigkeitsrate von 0,1 bis 50 Gramm/m² · 24 h (bestimmt bei 22 °C und 100 % relativer Luftfeuchtigkeit innen und 50 % außen), vorzugsweise 1 bis 20 ml/m² · 24 h · bar, hat.

8. Verfahren zur Herstellung eines verpackten Chicoréeprodukts nach Anspruch 1 bis 7, das die Schritte aufweist:
Einbringen von frischem Chicorée und einem proteinhaltigen Produkt, das aus der Gruppe aus Käse, Fleischprodukten und deren Kombinationen ausgewählt ist, in einen Behälter und Verschließen des Behälters mit einer Folie, wobei die Beschaffenheit der Folie, die Beschaffenheit des Behälters, die Menge von Chicorée und die Anfangsatmosphäre der Verpackung so ausgewählt werden, dass die Verpackung einen Sauerstoffzufluss von 0,05 bis 3,2 ml/kg · Stunde und einen Kohlendioxidausfluss von 0,3 bis 1,5 ml/kg · Stunde, beide bei 4 bis 7 °C Temperatur bestimmt, hat.

9. Verfahren nach Anspruch 8, wobei der Behälter mit einer Atmosphäre versehen wird, die 3-10 % Sauerstoff, insbesondere 4 bis 8 %, stärker insbesondere 5 bis 7 %, und als Rest ein Inertgas, beispielsweise Stickstoff, aufweist, und der Behälter mit einer Folie verschlossen wird, die eine Sauerstoff-Durchlässigkeitsrate von 1500 bis 3000 ml/m² · 24 h · bar (bestimmt bei 22 °C und 95 % relativer Luftfeuchtigkeit) und eine Kohlendioxid-Durchlässigkeitsrate von 4000 bis 12000 ml/m² · 24 h · bar (bestimmt bei 22 °C und 95 % relativer Luftfeuchtigkeit) sowie eine Wasserdampf-Durchlässigkeitsrate von 0,1 bis 2 Gramm/m² · 24 h hat.

10. Verfahren nach Anspruch 8, wobei der Behälter mit einer Atmosphäre versehen wird, die Luft aufweist, und der Behälter mit einer Folie verschlossen wird, die eine Sauerstoff-Durchlässigkeitsrate von 200 bis 1000 ml/m² · 24 h · bar und eine Kohlendioxid-Durchlässigkeitsrate von 1000 bis 6000 ml/m² 24 h · bar hat.

11. Verfahren zur Herstellung eines gekochten Chicoréeprodukts, wobei ein verpacktes Chicoréeprodukt nach einem der Ansprüche 1 bis 7 für eine ausreichende Zeit erwärmt wird, um ein gekochtes Produkt herzustellen.

## Revendications

1. Produit à base de chicorée emballée comprenant un récipient contenant de la chicorée fraîche et un produit contenant des protéines choisi dans le groupe constitué de fromage, de produits de viande, et de leurs combinaisons, dans lequel le récipient est fermé avec une feuille, dans lequel l'emballage fermé a un débit entrant d'oxygène de 0,05 à 3,2 ml/kg.heure et un flux sortant de dioxyde de carbone de 0,3 à 1,5 ml/kg.heure, tous deux sont déterminés à une température de 4 à 7 °C.

2. Produit à base de chicorée emballée selon la revendication 1, **caractérisé en ce que** l'emballage fermé a un débit entrant d'oxygène de 0,05 à 2,0 ml/kg.heure et un flux sortant de dioxyde de carbone de 0,5 ml à 1,0 ml/kg.heure.

3. Produit à base de chicorée emballée selon la revendication 1 ou 2,
**caractérisé en ce que** le produit contenant des protéines comprend la combinaison de jambon et de fromage.

4. Produit à base de chicorée emballée selon l'une quelconque des revendications précédentes, **caractérisé en ce que** le récipient et la feuille sont adaptés à une utilisation dans un four à micro-ondes, dans un four, dans un four à vapeur, dans un four à micro-ondes suivie d'un chauffage sous une grille, après enlèvement de la feuille, ou, de préférence, adaptés à l'utilisation de tous les appareils cités ci-dessus.

5. Produit à base de chicorée emballée selon l'une quelconque des revendications précédentes dans lequel la feuille a une épaisseur comprise entre 5 et 150 microns, de préférence entre 10 et 50 microns, plus préférentiellement entre 15 et 40 microns.

6. Produit à base de chicorée emballée selon l'une quelconque des revendications précédentes dans lequel la feuille a une vitesse de transmission d'oxygène de 25 à 10000 ml/m².24hr.bar (déterminée à 22 °C et à une humidité relative de 95%), plus particulièrement de 100 à 7000 ml/m².24hr.bar et une vitesse de transmission de dioxyde de carbone de 500 à 20000 ml/m².24hr.bar (déterminée à 22 °C et à une humidité relative de 95%), plus particulièrement de 3000 à 12000 ml/m².24hr.bar.

7. Produit à base de chicorée emballée selon l'une quelconque des revendications précédentes, dans lequel l'emballage a un flux sortant d'humidité de 0,1 à 0,6 gramme/jour, et la feuille a une vitesse de transmission de vapeur d'eau de 0,1 à 50 gramme/m².24h (déterminée à 22 °C et à une humidité relative de 100% à l'intérieur et de 50% à l'extérieur), de préférence de 1 à 20 ml/m².24hr.bar.

8. Procédé de préparation de produit à base de chicorée emballée selon les revendications 1 à 7, qui comprend les étapes qui consistent à mettre de la chicorée fraîche et un produit contenant des protéines choisi dans le groupe constitué de fromage, de produits de viande, et de leurs combinaisons, dans un récipient, et à fermer le récipient avec une feuille, dans lequel la nature de la feuille, la nature du récipient, la quantité de chicorée, et l'atmosphère de départ de l'emballage sont choisis de sorte que l'emballage ait un débit entrant d'oxygène de 0,05 à 3,2 ml/kg.heure, et un débit sortant de dioxyde de carbone de 0,3 à 1,5 ml/kg.heure, tous les deux sont déterminés à une température de 4 à 7 °C.

9. Procédé selon la revendication 8, dans lequel le récipient est doté d'une atmosphère comprenant 3 à 10% d'oxygène, en particulier 4 à 8%, plus particulièrement 5 à 7% et le reste un gaz inerte, par exemple l'azote, et le récipient est fermé par une feuille qui présente une vitesse de transmission d'oxygène de 1500 à 3000 ml/m².24hr.bar (déterminée à 22 °C et à une humidité relative de 95%) et une vitesse de transmission de dioxyde de carbone de 4000 à 12000 ml/m2.24hr.bar (déterminée à 22 °C et à une humidité relative de 95%), et une vitesse de transmission de vapeur d'eau de 0,1 à 2 gramme/m².24h.

10. Procédé selon la revendication 8, dans lequel le récipient est doté d'une atmosphère comprenant de l'air, et le récipient est fermé par une feuille qui présente une vitesse de transmission d'oxygène de 200 à 1000 ml/m².24hr.bar et une vitesse de transmission de dioxyde de carbone de 1000 à 6000 ml/m².24h.bar.

11. Procédé de préparation d'un produit à base de chicorée cuite dans lequel un produit à base de chicorée emballée selon l'une quelconque des revendications 1 à 7 est chauffé pendant un temps suffisant pour préparer un produit cuit.
